# EUROPEAN PATENT APPLICATION

(11) **EP 3 550 476 A1**
(43) Date of publication of application: **09.10.2019**
(21) Application number: 17875535.1
(22) Date of filing: 15.11.2017
(51) Int. Cl.: G06N 99/00

(54) **INFORMATION PROCESSING DEVICE AND INFORMATION PROCESSING METHOD**

(30) Priority: 29.11.2016 JP 2016230899
(71) Applicant: Sony Corporation, Tokyo 108-0075 (JP)
(72) Inventor: IDE Naoki, Tokyo 108-0075 (JP); FUKUI Akira, Tokyo 108-0075 (JP); NAKAHASHI Ryo, Tokyo 108-0075 (JP); MATSUNAGA Hideyuki, Tokyo 108-0075 (JP)
(74) Representative: MFG Patentanwälte Meyer-Wildhagen Meggle-Freund Gerhard PartG mbB
(86) International application number: PCT/JP2017/041012
(87) International publication number: WO 2018/101035

(57) **Abstract**

The present technique relates to an information processing apparatus and an information processing method each enabling a reward to be properly imparted for an action.

The information processing apparatus includes a reward estimating part executing estimation of a reward for an action on a basis of a user input for the action and a presentation control part executing control for presentation of an estimated reward. The present technique is applicable to an agent such as a robot, an electronic device, software, or the like that can, for example, assist a user, communicate with the user, and the like.

## Description

### [Technical Field]

The present technique relates to an information processing apparatus and an information processing method and, particularly, to an information processing apparatus and an information processing method that are adapted to be able to properly impart a reward for an action.

### [Background Art]

A technique has conventionally been proposed according to which a method of selecting a command operation (that is, an "action" in reinforced learning) that increases a score (that is, a "reward" in the reinforced learning) to be the maximum on the basis of screen information (that is, a "state" in the reinforced learning) in an environment of a game is automatically obtained by the reinforced learning (see, e.g., NPL 1).

### [Citation List]

### [Non Patent Literature]

[NPL 1]
V. Mnih and seven others, "Playing Atari with deep reinforcement learning," In Deep Learning, Neural Information Processing Systems Workshop, 2013

### [Summary]

### [Technical Problems]

Relating to the above, with the technique described in NPL 1, an apparent score is imparted as a reward while any apparent score is not often supplied as a reward in the real world. A non-linear process of converting an input from the environment into a reward may therefore be necessary.

For example, in the case where an agent that assists a user is considered, the user (that is, an environment in machine learning) imparts a reward for an action of the agent and thereby executes reinforced learning, and thereby the assist function is optimized. This reward is not necessarily imparted by direct means and a non-linear process of converting an input from the user into a reward may therefore be necessary. For example, a non-linear process of converting words pronounced by the user (such as, for example, "thank you" or "no") into a reward may be necessary.

In this non-linear process, learning is executed in advance on the premise that users share the learning thereamong. The input to impart the reward however differs among the users. Moreover, the content of the non-linear process is usually unknown for the users and the users do not exactly know how an input is converted into a reward, and the users each cannot necessarily execute usually proper inputting. A difference may therefore be generated between the reward intended by the user and the reward recognized by the agent. Because of this difference, the agent may execute wrong learning and no assist function satisfying the user may be provided.

The present technique therefore enables proper imparting of a reward for an action.

### [Solution to Problems]

An information processing apparatus in an aspect of the present technique includes a reward estimating part executing estimation of a reward for an action on a basis of a first user input for the action, and a presentation control part executing control for presentation of an estimated reward.

The reward estimating part can be caused to execute correction of the reward for the action on a basis of a second user input that is input after the presentation of the estimated reward.

The reward estimating part can be caused to execute correction of the reward for the action on a basis of the second user input that is input in a predetermined time period after the presentation of the estimated reward.

The presentation control part can be caused to execute control for presentation indicating that the second user input is being accepted.

The presentation control part can be caused to execute control for presentation of a reward after the correction.

The reward estimating part can be caused to correct the reward for the action to a reward estimated on a basis of the second user input.

The reward estimating part can be caused to correct the reward for the action to a reward produced by weighted-adding the reward estimated on a basis of the first user input and the reward estimated on a basis of the second user input, to each other.

The reward estimating part can be caused to determine necessity or unnecessity of any correction for the reward, on a basis of at least one of a difference between the reward estimated on a basis of the first user input and the reward estimated on a basis of the second user input, and a time period up to the time when the second user input is executed.

A first learning part can further be disposed that executes learning of a model used for the estimation of the reward, using a combination of the first user input and the reward after the correction.

A second learning part can further be disposed that executes learning of a model used for execution of the action, using a combination of the action and the reward after the correction.

The presentation control part can be caused to control such that the estimated reward is presented using a method different from that of the presentation of an emotion by the information processing apparatus.

An information processing method in an aspect of the present technique includes a reward estimation step of executing estimation of a reward for an action on a basis of a user input for the action, and a presentation control step of executing control for presentation of an estimated reward.

In an aspect of the present technique, estimation of a reward for the action is executed on the basis of the user input for the action and the estimated reward is presented.

### [Advantageous Effect of Invention]

According to an aspect of the present technique, a reward for any action can properly be imparted.

In addition, the effect described above is not necessarily limited and may be any one effect of those described in this disclosure.

### [Brief Description of Drawings]

FIG. 1 is a block diagram depicting an embodiment of an information processing apparatus to which the present technique is applied.
FIG. 2 is a schematic diagram depicting an example of a configuration of an outer appearance of a robot.
FIG. 3 is a schematic diagram depicting an example of a configuration of an outer appearance of an electronic device.
FIG. 4 is a schematic diagram depicting an example of a configuration of an outer appearance of a smartphone.
FIG. 5 is a flowchart for explaining information processing executed by the information processing apparatus.
FIG. 6 is a flowchart for explaining the information processing executed by the information processing apparatus.
FIG. 7 is a diagram depicting an example of a presentation method for a reward.
FIG. 8 is a block diagram depicting an example of a configuration of a computer.

### [Description of Embodiments]

Forms to implement the present invention (hereinafter, each described as an "embodiment") will be described below in detail with reference to the drawings. In addition, the description will be made in the following order.
1. Embodiments
2. Modification Examples
3. Application Examples

### 1. Embodiments

### <Example of Configuration of Information Processing Apparatus>

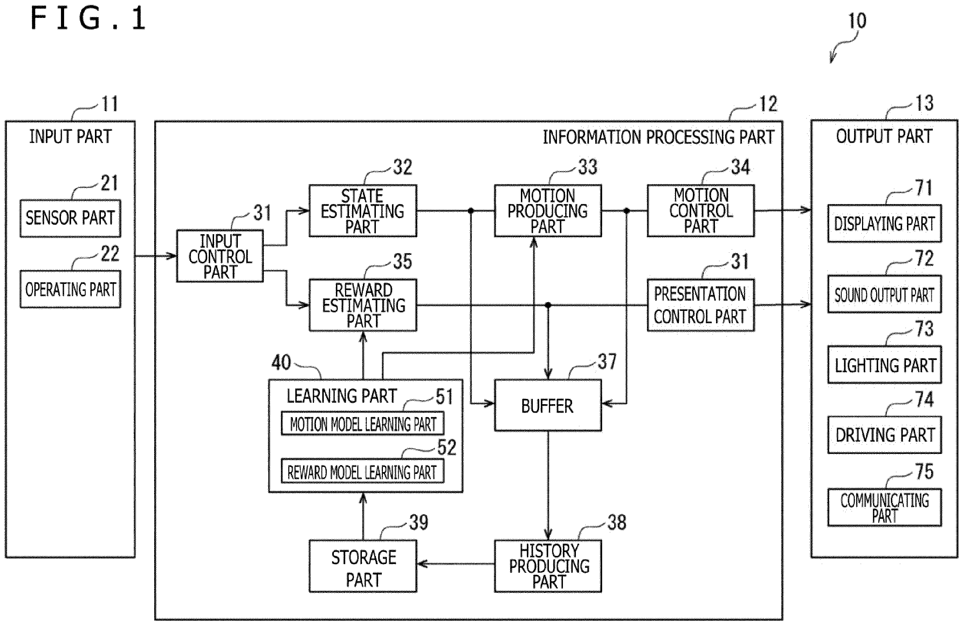

An example of the configuration of an information processing apparatus 10 to which the present technique is applied will first be described with reference to FIG. 1.

The information processing apparatus 10 constitutes an agent that executes, for example, an assist for a user (such as, for example, a robot, an electronic device, or software). The information processing apparatus 10 includes an input part 11, an information processing part 12, and an output part 13.

The input part 11 is used for inputting various types of data into the information processing apparatus 10. For example, the input part 11 includes a sensor part 21 and an operation part 22.

The sensor part 21 includes one or more type(s) of sensor. For example, the sensor part 21 includes an image sensor, a position sensor, an inertia sensor, an environment sensor, an electric wave sensor, a tactile sensor, a microphone, and/or the like. Types of the image sensor include, for example, an imaging sensor, a depth sensor, a heat distribution sensor, and the like. Types of the position sensor include, for example, a GPS receiver and the like. Types of the inertia sensor include, for example, an acceleration sensor, a rotation (gyro) sensor, a velocity (odometry) sensor, and the like. Types of the environment sensor include, for example, a temperature sensor, a barometric sensor, a geomagnetic sensor, an illuminance sensor, and the like. Types of the electric wave sensor include, for example, communication devices of various schemes such as a cellular scheme, Wi-Fi, Bluetooth (a registered trademark), and the like. The sensors in the sensor part 21 each produce sensor data that indicates a detection result, and each supply the sensor data to an input control part 31 of the information processing part 12.

The operation part 22 includes one or more type(s) of operational device. Types of the operational device include, for example, a button, a switch, a keyboard, a mouse, a touch panel, and the like. Each of the operational devices of the operation part 22 produces operation data that indicates the content of the operation, and supplies the operation data to the input control part 31 of the information processing part 12.

In addition, the pieces of data output from the components of the input part 11 will hereinafter be collectively referred to as "input data."

The information processing part 12 includes, for example, a processor, a storage apparatus, and the like. The information processing part 12 includes the input control part 31, a state estimating part 32, a motion producing part 33, a motion control part 34, a reward estimating part 35, a presentation control part 36, a buffer 37, a history producing part 38, a storage part 39, and a learning part 40.

The input control part 31 controls inputting of the input data from the input part 11 and supply of the obtained input data to the state estimating part 32 and the reward estimating part 35.

The state estimating part 32 estimates the state of the information processing apparatus 10 on the basis of observation variables based on the input data. The state estimating part 32 supplies state information including the state variables that indicate the estimated state to the motion producing part 33 and the buffer 37. Moreover, the state estimating part 32 detects the action instructed by the user on the basis of the input data, and notifies the motion producing part 33 of the result of the detection.

The motion producing part 33 executes selection of the action to be executed by the information processing apparatus 10 on the basis of the instruction from the user, or a motion model constructed by the motion model learning part 51 and the state variables. Moreover, the motion producing part 33 produces action information that indicates the series of processes executed by the components of the output part 13 necessary for the action to be executed and supplies the action information to the motion control part 34 and the buffer 37.

The motion control part 34 controls the components of the output part 13 on the basis of the action information and thereby causes the action selected by the motion producing part 33 to be executed.

The reward estimating part 35 executes estimation of the reward imparted by the user for the action of the information processing apparatus 10 on the basis of the reward model constructed by a reward model learning part 52 and the observation variables based on the input data. The reward estimating part 35 supplies reward information that indicates the estimated reward to the presentation control part 36 and the buffer 37. Moreover, the reward estimating part 35 supplies the observation information including the observation variables used in the estimation of the reward, to the buffer 37.

The presentation control part 36 controls the components of the output part 13 and thereby controls the presentation and the like of the reward estimated by the reward estimating part 35.

The history producing part 38 executes production and updating of an action history indicating the history of the action of the information processing apparatus 10 and a reward history indicating the history of the reward imparted to the information processing apparatus 10, on the basis of the observation information, the state information, the action information, and the reward information that are accumulated in the buffer 37.

The learning part 40 includes the motion model learning part 51 and the reward model learning part 52.

The motion model learning part 51 executes learning of the motion model used in the execution of the action of the information processing apparatus 10 on the basis of the motion history stored in the storage part 39. The motion model learning part 51 supplies the constructed motion model to the motion producing part 33.

The reward model learning part 52 executes learning of the reward model used in the estimation of the reward to be imparted by the user for the action of the information processing apparatus 10 on the basis of the reward history stored in the storage part 39. The reward model learning part 52 supplies the constructed reward model to the reward estimating part 35.

The output part 13 executes, for example, execution of various types of action, presentation of various types of information, and the like. The various types of action include not only actions each associated with a movement but also, for example, exhibition of an emotion and the like. The output part 13 includes, for example, a displaying part 71, a sound output part 72, a lighting part 73, a driving part 74, and a communicating part 75.

The displaying part 71 includes one or more type(s) of displaying device. The types of displaying device include, for example, a display, an apparatus that displays various types of parameter and measured values, and the like (such as, for example, a gauge), an apparatus that mimics an expression on someone's face, an image output terminal to externally output image data, and the like.

The sound output part 72 includes one or more type(s) of sound output device. The types of sound output device include, for example, a speaker, a buzzer, an alarm, a chime, a sound output terminal to externally output sound data, and the like.

The lighting part 73 includes one or more type(s) of lighting device. The types of lighting device include, for example, an LED (Light Emitting Diode), a lamp, and the like.

The driving part 74 includes one or more type(s) of driving device. The types of driving device include, for example, an actuator and the like.

The communicating part 75 includes one or more type(s) of communicating device. Any optional scheme can be employed as the communication scheme of the communicating device.

### <Specific Example of Information Processing Apparatus>

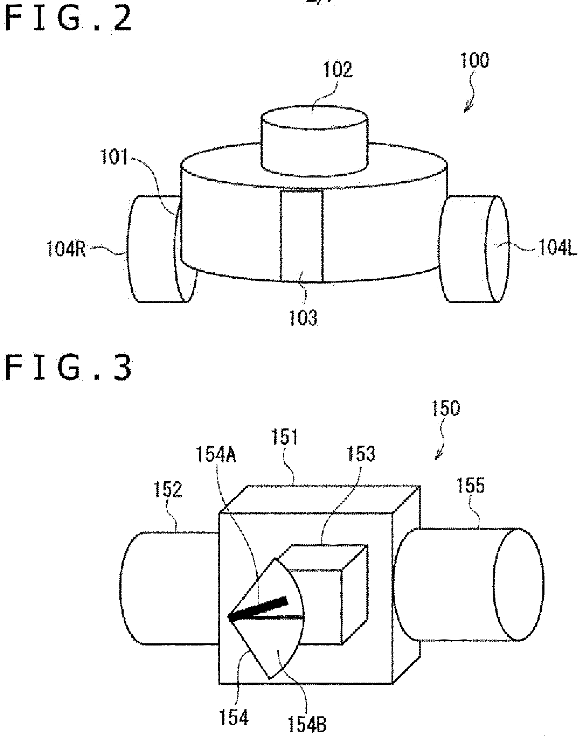

A specific example of the information processing apparatus 10 will be described next with reference to FIG. 2 to FIG. 4.

FIG. 2 schematically depicts an example of the configuration of the outer appearance of a robot 100 that is the first embodiment of the information processing apparatus 10.

The robot 100 is, for example, a robot capable of assisting a user, communicating with the user, and the like. The robot 100 includes a housing 101, a tactile sensor 102, a gauge 103, an actuator 104L, and an actuator 104R.

The tactile sensor 102 having a columnar shape is disposed on the top face of the housing 101 having a columnar shape, the gauge 103 is disposed on the front face thereof, and the actuator 104L and the actuator 104R each having a columnar shape are disposed on the right and the left of the side face thereof.

The tactile sensor 102 can detect the position at which a user's finger or the like touches, the pressure thereof, and the like, and is used for communication and the like with the user. The tactile sensor 102 is included in, for example, the sensor part 21 of the information processing apparatus 10 in FIG. 1.

The gauge 103 includes a light emitting element of which the color, the brightness, presence or absence of the flashing, the rate of the flashing, and the like can be adjusted, and the emotion and the like of the robot 100 are expressed using the color, the brightness, the flashing, and the like of the light. The gauge 103 is included in, for example, the lighting part 73 of the information processing apparatus 10 in FIG. 1.

The actuator 104L and the actuator 104R are used for the robot 100 to execute predetermined movements. The actuator 104L and the actuator 104R are included in, for example, the driving part 74 of the information processing apparatus 10 in FIG. 1.

FIG. 3 schematically depicts an example of the configuration of an outer appearance of an electronic device 150 that is the second embodiment of the information processing apparatus 10.

The electronic device 150 is a device that executes a process in accordance with an instruction input by the user using a sound or an instruction delivered from a distant point by the user through a network. The electronic device 150 includes a housing 151, a sensor part 152, an information processing part 153, a gauge 154, and a speaker 155.

The sensor part 152 having a columnar shape is disposed on a right side face of the housing 151 having a cuboid shape, the information processing part 153 having a cuboid shape is disposed on the front face thereof, and the speaker 155 having a columnar shape is disposed on the left side face thereof. The gauge 154 is disposed on the front face of the information processing part 153.

The sensor part 152 includes, for example, a microphone, a camera, a vibration sensor, and the like. The sensor part 152 corresponds to, for example, the sensor part 21 of the information processing apparatus 10 in FIG. 1.

The information processing part 153 corresponds to, for example, the information processing part 12 of the information processing apparatus 10 in FIG. 1.

The gauge 154 includes a hand 154A that rotates in the up-and-down direction using its one end as the pivot and a scale plate 154B that can become luminous. The gauge 154 represents the emotion and the like of the electronic device 150 using the position of the hand 154A and the color, the brightness, and the like of the scale plate 154B. In addition, as to the position of the hand 154A, the direction more upward than the horizontal direction is defined as the positive direction and the direction more downward than the horizontal direction is defined as the negative direction. The gauge 154 is included in, for example, the displaying part 71 and the lighting part 73 of the information processing apparatus 10 in FIG. 1.

The speaker 155 is included in, for example, the sound output part 72 of the information processing apparatus 10 in FIG. 1.

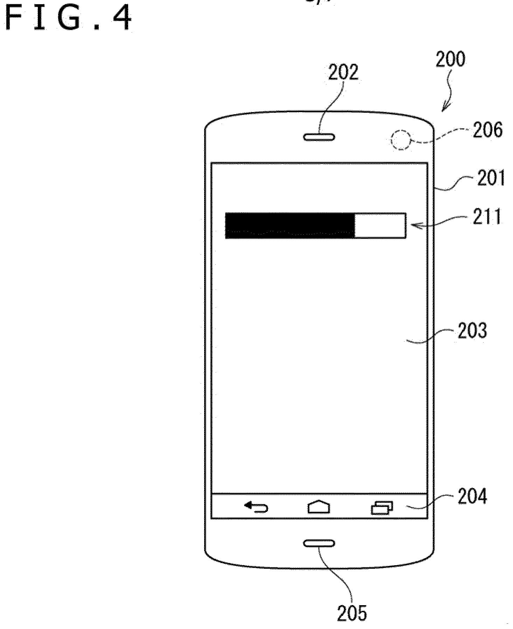

FIG. 4 schematically depicts an example of the configuration of an outer appearance of a smartphone 200 that is the third embodiment of the information processing apparatus 10. The smartphone 200 includes a housing 201, a speaker 202, a display 203, a button group 204, a microphone 205, and a camera 202.

The speaker 202 is disposed in the vicinity of the upper end of the front face of the housing 201 having a substantially rectangular board-like shape. The speaker 202 is included in, for example, the sound output part 72 of the information processing apparatus 10 in FIG. 1.

The display 203 is a touch panel-type one and is disposed on the front face of the housing 201. The portion corresponding to the touch panel of the display 203 is included in, for example, the operation part 22 of the information processing apparatus 10 in FIG. 1 and the portion corresponding to the display is included in, for example, the displaying part 71 of the information processing apparatus 10 in FIG. 1.

The button group 204 is disposed under the display 203 on the front face of the housing 201. The button group 204 is included in, for example, the operation part 22 of the information processing apparatus 10 in FIG. 1.

The microphone 205 is disposed in the vicinity of the lower end of the front face of the housing 201. The microphone 205 is included in, for example, the sensor part 21 of the information processing apparatus 10 in FIG. 1.

A lens of the camera 206 is disposed in the vicinity of the upper end of the back face of the housing 201. The camera 206 is included in, for example, the sensor part 21 of the information processing apparatus 10 in FIG. 1.

### <Specific Example of Process by Information Processing Apparatus 10>

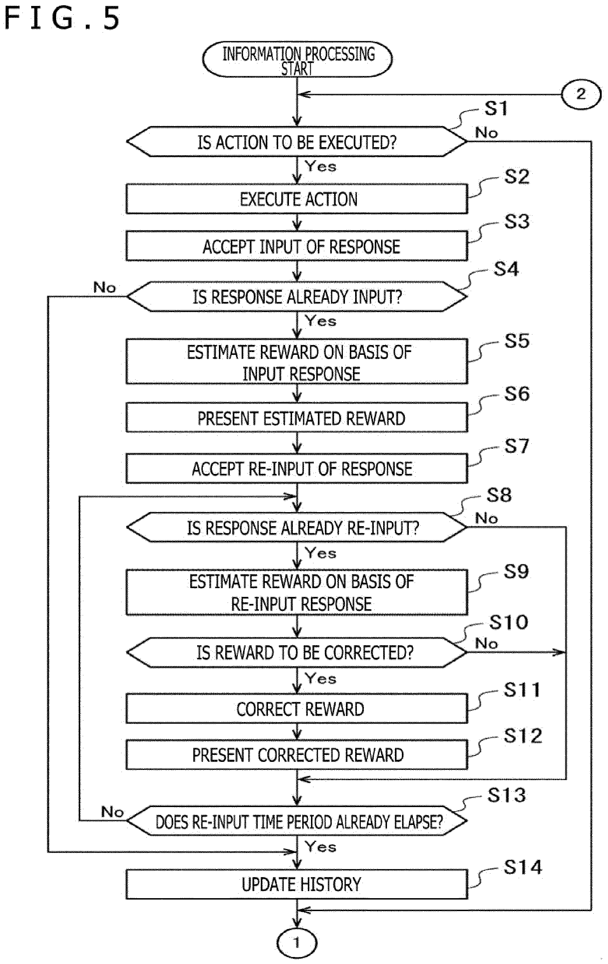

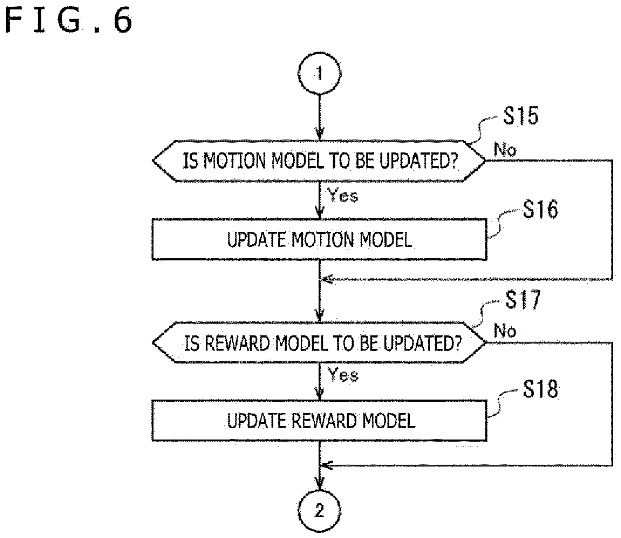

Information processing executed by the information processing apparatus 10 will be described next with reference to a flowchart in FIG. 5 and FIG. 6. For example, this processing is started when the power source of the information processing apparatus 10 is turned on, and is ended when the power source of the information processing apparatus 10 is turned off.

In addition, the description will be made properly taking the processing executed by each of the robot 100 in FIG. 2, the electronic device 150 in FIG. 3, and the smartphone 200 in FIG. 4 as a specific example.

At step S1, the information processing part 12 determines whether or not an action is to be executed. For example, in the case where the state estimating part 32 detects that the execution of the action is instructed by the user, on the basis of the input data supplied thereto from the input part 11 through the input control part 31, the state estimating part 32 determines that the action is to be executed and the processing is advanced to step S2.

At step S2, the information processing apparatus 10 executes the action. More specifically, the state estimating part 32 estimates the state of the information processing apparatus 10 on the basis of the observation variables based on the input data. The state of the information processing apparatus 10 includes the state of the inside of the information processing apparatus 10 and the state of the exterior of the information processing apparatus 10 (such as, for example, the surrounding environment and the like). Moreover, the observation variables include not only the input data but also, for example, data formed by processing the input data (such as, for example, the expression on the user's face and the posture of the user, the phonemes, text data, and the like).

The state estimating part 32 supplies state information including the state variables indicating the estimated state to the motion producing part 33, and causes the buffer 37 to accumulate therein the state information. In addition, in the case where old state information is accumulated in the buffer 37, the state estimating part 32 overwrites the old state information with the new state information. Moreover, the state estimating part 32 notifies the motion producing part 33 of the content of the action instructed by the user.

In addition, for example, in the case where the observation variables directly represent the state, the state estimating part 32 determines the state variables by identity-transforming the observation variables.

The motion producing part 33 determines the series of processes executed by the components of the output part 13 to execute the action instructed by the user, on the basis of the motion model and the state variables. The motion producing part 33 supplies the action information indicating the determined processes to the motion control part 34 and causes the buffer 37 to accumulate therein the action information. In addition, in the case where old action information is accumulated in the buffer 37, the state estimating part 32 overwrites the old action information with the new action information.

The motion control part 34 controls the components of the output part 13 on the basis of the action information, and thereby causes the action instructed by the user to be executed.

In addition, the information processing apparatus 10 may be adapted to execute the action on the basis of not the instruction by the user but, for example, the state, in the processes at step S1 and step S2.

For example, at step S1, the state estimating part 32 estimates the state of the information processing apparatus 10 on the basis of the observation variables based on the input data supplied thereto from the input part 11 through the input control part 31. The state estimating part 32 supplies the state information including the state variables that indicate the estimated state to the motion producing part 33, and cause the buffer 37 to accumulate therein the state information. In addition, in the case where old state information is accumulated in the buffer 37, the state estimating part 32 overwrites the old state information with the new state information.

The motion producing part 33 determines presence or absence of any execution of the action on the basis of the motion model and the state variables and, in the case where the motion producing part 33 determines that the action is to be executed, the processing is advanced to step S2.

At step S2, the motion producing part 33 selects the action to be executed, on the basis of the motion model and the state variables. Moreover, to execute the selected action, the motion producing part 33 determines the series of processes to be executed by the components of the output part 13. The series of processes are determined such as, for example, the connection of the network is switched from the cellular scheme to Wi-Fi, a browser is thereafter started up, and the like. The motion producing part 33 supplies the action information that indicates the determined processes to the motion control part 34 and causes the buffer 37 to accumulate therein the action information. In addition, in the case where old action information is accumulated in the buffer 37, the state estimating part 32 overwrites the old action information with the new action information.

The motion control part 34 controls the components of the output part 13 on the basis of the action information and thereby causes the selected action to be executed.

At step S3, the information processing apparatus 10 accepts an input of a response. For example, after the action by the information processing apparatus 10 comes to an end, the input control part 31 accepts an input of the response that is a user input to impart a reward for the action for a predetermined time period (hereinafter, referred to as "initial response time period"). The input control part 31 supplies the input data supplied from the input part 11 in the initial response time period, to the reward estimating part 35.

In addition, the response to the action may be a response actively or consciously input by the user (an active or a conscious user input) or may be a response passively or unconsciously input thereby (a passive or an unconscious user input).

In the case of the former, a response is input by, for example, the fact that the user consciously changes the expression on the user's face, changes the posture of the user, makes a gesture, or makes a sound. Otherwise, the response is input by the fact that the user operates the operation part 22.

In the case of the latter, for example, the reward estimating part 35 detects a natural response of the user to the action (such as, for example, the expression on the face, a body movement, and the like) on the basis of the input data (such as, for example, the image data or the sound data).

For example, in the case of the robot 100 in FIG. 2, the user inputs a response by touching the tactile sensor 102. For example, in the case where the robot 100 executes an action as expected, the user praises the robot 100 by gently rubbing the tactile sensor 102. On the other hand, in the case where the robot 100 does not execute any action as expected, the user scolds the robot 100 by patting the tactile sensor 102.

For example, in the case of the electronic device 150 in FIG. 3 or the smartphone 200 in FIG. 4, the user inputs the response using a sound. For example, in the case where the electronic device 150 or the smartphone 200 executes an action as expected, the user praises the electronic device 150 or the smartphone 200 using words such as "thank you." On the other hand, in the case where the electronic device 150 or the smartphone 200 does not execute any action as expected, the user scolds the electronic device 150 or the smartphone 200 using words such as "no."

At step S4, the reward estimating part 35 determines whether or not any response is input, on the basis of the input data that is input in the initial response time period. In the case where the reward estimating part 35 determines that a response is input, the processing is advanced to step S5.

At step S5, the reward estimating part 35 estimates the reward on the basis of the input response. More specifically, the reward estimating part 35 estimates the reward imparted by the user for the action executed at step S2, on the basis of the reward model and the observation variables based on the input data that corresponds to the input response. In other words, the reward estimating part 35 estimates the reward that is represented by the response by the user. The reward estimating part 35 supplies initial reward information that indicates the estimated reward (hereinafter, referred to as "initial reward") to the presentation control part 36 and causes the buffer 37 to accumulate therein the initial reward information. Moreover, the reward estimating part 35 causes the buffer 37 to accumulate therein the initial observation information including the observation variables used to recognize the initial reward. In addition, in the case where old initial reward information and the initial observation information are accumulated in the buffer 37, the state estimating part 32 overwrites the old initial reward information and the old initial observation information with the new initial reward information and the new initial observation information.

In addition, in the case where the reward is input as the response, the reward estimating part 35 determines the reward by simply identity-transforming the response.

At step S6, the presentation control part 36 controls the components of the output part 13 and thereby presents the estimated reward (the initial reward).

For example, in the case of the robot 100 in FIG. 2, the initial reward is presented by the gauge 103. For example, in the case where the robot 100 estimates that a positive reward is imparted (in the case where it is estimated that the action is recognized by the user), the robot 100 sets the gauge 103 to have the color and the brightness that are similar to those of the case where the emotion of joy is exhibited. On the other hand, for example, in the case where the robot 100 estimates that a negative reward is imparted (in the case where it is estimated that the action is not recognized by the user), the robot 100 sets the gauge 103 to have the color and the brightness that are similar to those of the case where the emotion of sadness is exhibited. At this time, the color and the brightness of the gauge 103 may be varied in accordance with the value (the level) of the initial reward.

Moreover, the robot 100 causes the user to reliably recognize that the emotion of the robot 100 is not exhibited but the estimated reward is presented, by, for example, flashing the gauge 103.

In the case of the electronic device 150 in FIG. 3, the initial reward is presented using the gauge 154 and a sound. For example, in the case where the electronic device 150 estimates that a positive reward is imparted, the electronic device 150 moves the hand 154A of the gauge 154 in the positive direction. Moreover, the electronic device 150 sets the scale plate 154B of the gauge 154 to have the color and the brightness that are similar to those of the case where the emotion of joy is exhibited. The electronic device 150 further outputs from the speaker 155 a sound representing the feeling of joy or gratitude such as "I am happy," "thank you," "thank you very much," or the like.

On the other hand, for example, in the case where the electronic device 150 estimates that a negative reward is imparted, the electronic device 150 moves the hand 154A of the gauge 154 in the negative direction. Moreover, the electronic device 150 sets the scale plate 154B of the gauge 154 to have the color and the brightness that are similar to those of the case where the emotion of sadness is exhibited. The electronic device 150 further outputs from the speaker 155 a sound representing the feeling of sadness or apology such as "I feel sad," "I am sorry," "excuse me," "I apologize," "I do apologize," or the like.

At this time, the electronic device 150 may change the color and the brightness of the scale plate 154B or may change the expression of the output sound in accordance with the value (the level) of the initial reward.

Moreover, the electronic device 150 causes the user to reliably recognize not the fact that the emotion of the electronic device 150 is exhibited but the fact that the estimated reward is presented, by, for example, flashing the scale plate 154B.

In the case of the smartphone 200 in FIG. 5, the initial reward is presented using the display 203 and a sound. For example, in the case where the smartphone 200 estimates that a positive reward is imparted, the smartphone 200 increases the value on the gauge 211 displayed on the display 203. Moreover, the smartphone 200 outputs from the speaker 202 a sound representing the feeling of joy or gratitude such as "I am happy," "thank you," "thank you very much," or the like.

On the other hand, in the case where the smartphone 200 estimates that a negative reward is supplied, the smartphone 200 reduces the value on the gauge 211 displayed on the display 203. Moreover, the smartphone 200 outputs from the speaker 202 a sound representing the feeling of sadness or apology such as "I feel sad," "I am sorry," "excuse me," "I apologize," "I do apologize," or the like.

At this time, the smartphone 200 may vary the value on the gauge 211 or may change the expression of the output sound in accordance with the value (the level) of the initial reward.

Moreover, the smartphone 200 causes the user to reliably recognize not the fact that the emotion of the smartphone 200 is exhibited but the fact that the estimated reward is presented, by, for example, flashing a backlight of the display 203.

At step S7, the information processing apparatus 10 accepts a re-input of the response. For example, after the estimated reward is presented, the input control part 31 accepts a re-input of the response to the action for a predetermined time period (hereinafter, referred to as "correction response time period"). Moreover, the presentation control part 36 controls the components of the output part 13 and thereby causes the presentation to be executed to cause the user to recognize the correction response time period (the fact that the re-input of the response is accepted and any re-inputting can be executed). For example, the presentation representing that the estimated reward is presented (such as, for example, the flashing of the gauge 103, the flashing of the scale plate 154B, the flashing of the display 203, and the like) executed in the process at step S6 continues also during the correction response time period and comes to an end associated with the end of the correction response time period.

For example, in the case where the reward intended by the user and the reward estimated by the reward estimating part 35 differ from each other, the user again inputs a response to cause the reward estimating part 35 to recognize the correct reward. At this time, it is assumed that the user needs to more carefully input the response such that the intended reward is reliably recognized by the information processing apparatus 10. For example, in the case where the response is input using a sound, when the reward estimating part 35 is adjusted for the sound of the standard language, the reward tends to be wrongly recognized with strong local accents of the user. In contrast, for example, it is assumed that the user needs to input the sound using the pronunciation as close as that of the standard language when the response is re-input.

At step S8, the reward estimating part 35 determines whether or not the response is re-input, on the basis of the input data that is input in the correction response time period. In the case where the reward estimating part 35 determines that the response is re-input, the processing is advanced to step S9.

At step S9, the reward estimating part 35 estimates the reward on the basis of the re-input response. More specifically, the reward estimating part 35 again estimates the reward imparted by the user for the action executed at step S2 on the basis of the reward model, and the observation variables based on the input data corresponding to the re-input response.

At step S10, the reward estimating part 35 determines whether or not the reward is to be corrected. For example, the reward estimating part 35 determines whether or not the reward is to be corrected, on the basis of the time period necessary until the re-input of the response, the difference between the initial reward and the reward estimated in the process at step S9 (hereinafter, referred to as "re-input reward"), and the like.

For example, in the case where the time period necessary up to the re-input of the response is within the predetermined limit time period, it is estimated that the certainty factor of the user for the correction is high (the user does not dither) and the reward estimating part 35 therefore determines that the reward is to be corrected. On the other hand, in the case where the time period necessary up to the re-input of the response exceeds the limit time period, it is estimated that the certainty factor of the user for the correction is low (the user currently dithers) and the reward estimating part 35 therefore determines that the reward is not to be corrected.

Moreover, for example, in the case where the difference between the initial reward and the re-input reward is equal to or larger than a predetermined threshold value, the reward estimating part 35 determines that the reward is to be corrected. On the other hand, in the case where the difference between the initial reward and the re-input reward is smaller than the predetermined threshold value, the reward estimating part 35 determines that the reward is not to be corrected.

In addition, this determination process for the necessity or unnecessity of the correction is executed by, for example, a module that uses a neural net or the like.

In the case where the reward estimating part 35 determines that the reward is to be corrected, the processing is advanced to step S11.

At step S11, the reward estimating part 35 corrects the reward. For example, the reward estimating part 35 corrects the estimation result for the reward by replacing the initial reward with the re-input reward.

Otherwise, for example, the reward estimating part 35 corrects the recognition result for the reward by weighted-adding the initial reward and the re-input reward to each other. For example, the weight for the re-input reward becomes heavier as the time period necessary for the re-inputting of the response becomes shorter, and the weight for the re-input reward becomes lighter as the time period necessary for the re-inputting of the response becomes longer.

The reward estimating part 35 supplies corrected reward information that indicates the reward that is corrected (hereinafter, referred to as "corrected reward") to the presentation control part 36 and causes the buffer 37 to accumulate therein the corrected reward information. Moreover, the reward estimating part 35 causes the buffer 37 to accumulate therein the corrected observation information including the observation variables used in the estimation of the re-input reward. In addition, in the case where any old corrected reward information and any old corrected observation information are accumulated in the buffer 37, the reward estimating part 35 overwrites the old ones with the new corrected reward information and the new corrected observation information.

At step S12, the corrected reward is presented by the similar process as that at step S6. At this time, the information processing apparatus 10 may explicitly notify the user of the fact that the reward is corrected. For example, a sound is output such as, for example, "correction accomplished," "misunderstanding is present," "successfully done," or the like.

The processing is thereafter advanced to step S13.

On the other hand, in the case where the reward estimating part 35 determines at step S10 that the reward is not to be corrected, the processes at step S11 and step S12 are not executed and the processing is advanced to step S13.

Moreover, in the case where the reward estimating part 35 determines at step S8 that the response is not re-input, the processes at step S9 and step S12 are not executed and the processing is advanced to step S13.

At step S13, the input control part 31 determines whether or not the re-input time period elapses. In the case where the input control part 31 determines that the re-input time period does not yet elapse, the processing returns to step S8.

The processes at step S8 to step S13 are thereafter repeatedly executed until the input control part 31 determines at step S13 that the re-input time period already elapses. The user can thereby input the response for any times in the re-input time period to correct the reward. Moreover, the reward after the correction is presented to the user. In addition, in the case where the correction of the reward is executed for plural times, for example, the final correction may be set to be effective or the correction having a high certainty factor may be set to be effective.

On the other hand, in the case where the input control part 31 determines at step S13 that the re-input time period already elapses, the processing is advanced to step S14.

Moreover, in the case where the reward estimating part 35 determines at step S4 that no response is input, the processes at step S5 to step S13 are not executed, no estimation is executed for the reward, and the processing is advanced to step S14.

At step S14, the history producing part 38 updates the history stored in the storage part 39.

For example, in the case where the initial reward is not corrected as it is after the initial reward is imparted, the history producing part 38 obtains the state information, the action information, and the initial reward information that correspond to the action taken this time from the buffer 37, correlates these with each other, and adds these to the motion history. Moreover, the history producing part 38 obtains the initial observation information and the initial reward information that correspond to the action taken this time from the buffer 37, correlates these with each other, and adds these to the reward history.

On the other hand, in the case where the initial reward is corrected after the initial reward is imparted, the history producing part 38 obtains the state information, the action information, and the corrected reward information that correspond to the action taken this time from the buffer 37, correlates these with each other, and adds these to the motion history. Moreover, the history producing part 38 obtains the initial observation information and the corrected reward information that correspond to the action taken this time from the buffer 37, correlates these with each other, and adds these to the reward history. In other words, not the initial reward information before the correction but the corrected reward information after the correction is correlated with the initial observation information to be added to the reward history. Furthermore, the history producing part 38 obtains the corrected observation information and the corrected reward information that correspond to the action taken this time from the buffer 37, correlates these with each other, and adds these to the reward history.

Moreover, in the case where the reward is not imparted, the history producing part 38 obtains the state information and the action information that correspond to the action taken this time from the buffer 37, correlating these with each other, and adds these to the motion history. In this case, the reward information is not included in the added history. Moreover, the history producing part 38 does not update the reward history.

The processing is thereafter advanced to step S15.

On the other hand, the information processing part 12 determines at step S1 that no action is to be executed, the processes at step S2 to step S14 are not executed, and the processing is advanced to step S15.

At step S15, the motion model learning part 51 determines whether or not the motion model is to be updated. In the case where the predetermined conditions are satisfied, the motion model learning part 51 determines that the motion model is to be updated, and the processing is advanced to step S16. The predetermined conditions are, for example, that the time period elapsing after the motion model is updated in the previous time is equal to or longer than a predetermined threshold value, that the increase amount of the motion history after the motion model is updated in the previous time is equal to or larger than a predetermined threshold value, and the like.

At step S16, the motion model learning part 51 updates the motion model. In other words, the motion model learning part 51 executes learning using the motion history stored in the storage part 39 and updates the motion model.

In addition, any optional approach is usable for the learning of the motion model and, for example, reinforced learning is used. For example, the parameters of the motion model are learned using a gradient method such that a predicted reward function defined in advance is maximized. Moreover, in the case where the reinforced learning is used, the motion model can be constructed without preparing any large amount of leaning data including the input and the correct solution. Such learning methods can be considered as, for example, Q-learning, TD error learning, an ActorCritic method, SARSA, a policy gradient, a policy search, REINFORCE, and the like, as examples of the reinforced learning.

Moreover, more accurate reward is imparted for each action by executing the correction for the reward as above. In addition, for an action whose reward is corrected, a combination of the action and the reward after the correction for the action, that is, more strictly, a combination of the state information for the action, the action information, and the corrected reward information is used in the learning of the motion model. For using the reward information, the certainty factor thereof may further be concurrently used. For an action whose reward is not corrected, a combination of the action and the reward before the correction for the action, that is, more strictly, a combination of the state information for the action, the action information, and the initial reward information is used in the learning of the motion model. As a result, the precision of the motion model is improved.

The processing is thereafter advanced to step S17.

On the other hand, at step S15, in the case where the predetermined conditions are not satisfied, the motion model learning part 51 determines that the motion model is not to be updated, the process at step S16 is not executed, and the processing is advanced to step S17.

At step S17, the reward model learning part 52 determines whether or not the reward model is to be updated. In the case where predetermined conditions are satisfied, the reward model learning part 52 determines that the reward model is to be updated, and the processing is advanced to step S18. The predetermined conditions are, for example, that the time period elapsing after the reward model is updated in the previous time is equal to or longer than a predetermined threshold value, the increase amount of the motion history after the reward model is updated in the previous time is equal to or larger than a predetermined value, and the like.

At step S18, the reward model learning part 52 updates the reward model. In other words, the reward model learning part 52 executes learning using the reward history stored in the storage part 39 and updates the reward model.

In addition, for the reward model, for example, a neural network is used. Moreover, any optional approach is usable for the learning of the reward model and reinforced learning using, for example, a recurrent model (in the case where the reward is consecutive values) or a classification model (in the case where the reward is discrete values) is used.

Moreover, a more accurate reward is imparted to each response by executing the correction of the reward as above. In the case where the reward is corrected, a combination of the response and the reward after the correction, that is, more strictly, a combination of the initial observation information and the corrected reward information and a combination of the re-input observation information and the corrected reward information are used in the learning of the reward model. In the case where the reward is not corrected, a combination of the response and the reward before correction, that is, more strictly, a combination of the initial observation information and the initial reward information is used in the learning of the reward model. As a result, the precision of the reward model is improved.

The processing thereafter returns to step S1 and the processes at and after step S1 are executed.

On the other hand, at step S17, in the case where predetermined conditions are not satisfied, the reward model learning part 52 determines that the reward model is not to be updated, the processing returns to step S1, and processes at and after step S1 are executed.

As above, the reward for the action is properly imparted. As a result, a higher precision motion model and a higher precision reward model are constructed in a shorter time period. Moreover, for example, the reward model can be optimized matching this reward model with the tendency of the response of each user by constructing the reward model for each user.

Furthermore, the user can more correctly understand the relation between the response and the reward estimated by the information processing apparatus 10 (the non-linear process) and can impart a larger reward for a more proper action, by the fact that the estimated reward is presented.

### 2. Modification Example

Modification examples of the embodiments of the present technique described above will be described below.

### <Modification Example Relating to Presentation Method>

The presentation method for the estimated reward is not limited to the above methods and any optional method can be employed.

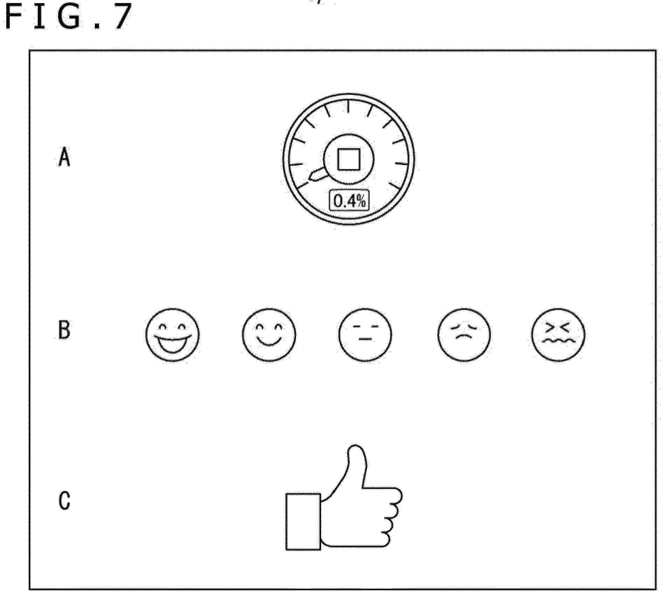

For example, the displaying part 71 may present the estimated reward using the value of the indicator depicted in A of FIG. 7.

Moreover, for example, the displaying part 71 may present the estimated reward using the images of the faces depicted in B of FIG. 7. In the case where the reward is imparted by a value at one of, for example, five ranks, the image of the leftmost face is displayed when it is estimated that the highest reward is imparted, the face of the displayed image transitions rightward as the reward is degraded, and the image of the rightmost face is displayed when it is estimated that the lowest reward is imparted.

Furthermore, for example, in the case where it is estimated that a positive reward is imparted, the displaying part 71 may display an image in C of FIG. 7.

Moreover, the presentation method of indicating the fact that the estimated reward is presented and the presentation method of indicating the corrected response time period (the fact that the re-input of the response is being accepted and any re-inputting is enabled) are same in the above description while presentation methods different from each other may be used. In addition, regardless of whether or not the two presentation methods are same, any optional presentation methods can be employed. In this regard, a presentation method capable of being reliably distinguished from the one in the case where the emotion of the information processing apparatus 10 is presented is desirably used.

Furthermore, for example, a presentation may be executed that presents not only the corrected response time period but also the initial response time period.

### <Modification Example Relating to Configuration of System>

The example of the configuration of the information processing apparatus 10 in FIG. 1 is an example thereof and may be changed as necessary.

For example, the assignation of the functions of the input part 11, the information processing part 12, and the output part 13 can be changed. Moreover, for example, a portion of the information processing apparatus 10 can be disposed in an external apparatus.

### <Other Modification Examples>

Any optional method can be employed as the method of inputting the response to the action and, moreover, plural input methods may be provided. In the case where plural input methods are provided, for example, the user can combine the plural methods, can select a method different from the method used in the first inputting for re-inputting the response, and the like.

Moreover, the motion producing part 33 may perform, for example, selection of the action in accordance with the rules provided in advance.

### 3. Application Examples

The above series of processes can be executed using the hardware and can also be executed using software. In the case where the series of processes is executed by the software, the programs constituting the software are installed in a computer. Concerning the above, types of the computer include a computer incorporated in the dedicated hardware, for example, a multi-purpose personal computer capable of executing various types of functions by installing therein various types of program, and the like.

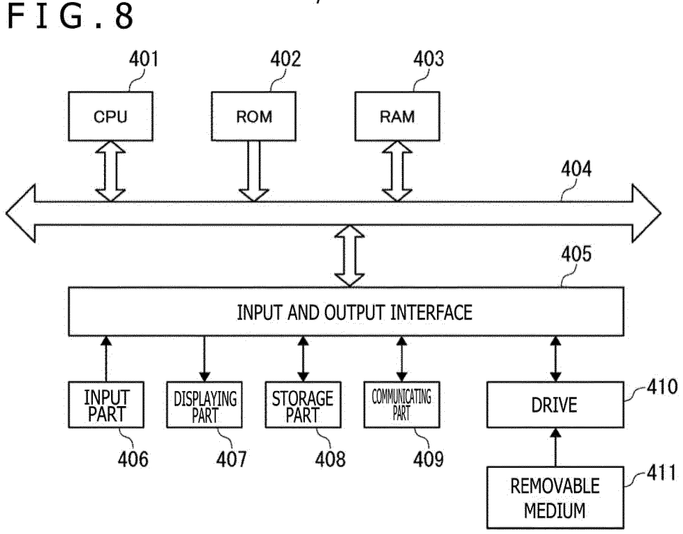

FIG. 8 is a block diagram depicting an example of the configuration of the hardware of a computer that executes the above series of processes using the programs.

In the computer, a CPU (Central Processing Unit) 401, a ROM (Read Only Memory) 402, and a RAM (Random Access Memory) 403 are connected to each other by a bus 404.

An input and output interface 405 is further connected to the bus 404. An input part 406, an output part 407, a storage part 408, a communicating part 409, and a drive 410 are further connected to the input and output interface 405.

The input part 406 includes a keyboard, a mouse, a microphone, and the like. The output part 407 includes a display, a speaker, and the like. The storage part 408 includes a hard disc, a non-volatile memory, and the like. The communicating part 409 includes a network interface and the like. The drive 410 drives a removable medium 411 such as a magnetic disc, an optical disc, a magneto-optical disc, a semiconductor memory, and the like.

In the computer configured as above, the CPU 401 loads programs stored in, for example, the storage part 408 on the RAM 403 through the input and output interface 405 and the bus 404 and executes the programs, and the above series of processes is thereby executed.

The programs executed by the computer (the CPU 401) can be recorded in, for example, the removable medium 411 as a package medium or the like, to be provided. Moreover, the programs can also be provided through a wired or a wireless transmission medium such as, a local area network, the Internet, or digital satellite broadcast.

For the computer, the programs can be installed into the storage part 408 through the input and output interface 405 by attaching the removable medium 411 to the drive 410. Moreover, the programs can be received by the communicating part 409 through the wired or the radio transmission medium and can be installed in the storage part 408. In addition, the programs can be installed in advance in the ROM 402 or the storage part 408.

In addition, the programs executed by the computer may be programs with which the processes are executed in the time-series order in accordance with the order described herein, or may be programs with which the processes are executed in parallel to each other or each at a necessary timing such as the time when an invocation is executed.

Moreover, plural computers may be adapted to cooperate with each other to execute the above processes. The computer system is constituted by one or plural computer(s) that execute(s) the above processes.

Moreover, the "system" as used herein means an aggregation of plural constituent elements (such as an apparatus, a module (a part), and the like), and all the constituent elements may be or may not be present in one same housing. Plural apparatuses each accommodated in an individual housing and connected to each other through a network, and one apparatus including one housing that has plural modules accommodated therein are both therefore each a system.

Furthermore, the embodiments of the present technique are not limited to the above embodiments and various changes can be made thereto within the scope not departing from the gist of the present technique.

For example, the present technique can take the configuration of cloud computing that processes one function using plural apparatuses that share the function thereby through a network and that each cooperate with each other.

Moreover, the steps described with reference to the above flowcharts can be executed by one apparatus and, in addition, can be executed by plural apparatuses by sharing the steps.

Moreover, in the case where one step includes plural processes, the plural processes included in the one step can be executed by one apparatus and, in addition, can be executed by plural apparatuses by sharing the processes.

Moreover, the effects described herein are each absolutely exemplification and are not limited, and other effects may be achieved.

Moreover, for example, the present technique can also take the following configurations.
(1) An information processing apparatus including:
   a reward estimating part executing estimation of a reward for an action on a basis of a first user input for the action; and
   a presentation control part executing control for presentation of an estimated reward.
(2) The information processing apparatus described in the above (1), in which
   the reward estimating part executes correction of the reward for the action on a basis of a second user input that is input after the presentation of the estimated reward.
(3) The information processing apparatus described in the above (2), in which
   the reward estimating part executes correction of the reward for the action on a basis of the second user input that is input in a predetermined time period after the presentation of the estimated reward.
(4) The information processing apparatus described in the above (2) or (3), in which
   the presentation control part executes control for presentation indicating that the second user input is being accepted.
(5) The information processing apparatus described in the above (2) to (4), in which
   the presentation control part executes control for presentation of a reward after the correction.
(6) The information processing apparatus described in any one of the above (2) to (5), in which
   the reward estimating part corrects the reward for the action to a reward estimated on a basis of the second user input.
(7) The information processing apparatus described in any one of the above (2) to (6), in which
   the reward estimating part corrects the reward for the action to a reward produced by weighted-adding the reward estimated on a basis of the first user input and the reward estimated on a basis of the second user input, to each other.
(8) The information processing apparatus described in any one of the above (2) to (6), in which
   the reward estimating part determines necessity or unnecessity of any correction for the reward, on the basis of at least one of a difference between the reward estimated on the basis of the first user input and the reward estimated on the basis of the second user input, and a time period up to the time when the second user input is executed.
(9) The information processing apparatus described in any one of the above (2) to (8), further including:
   a first learning part executing learning of a model used for the estimation of the reward, using a combination of the first user input and the reward after the correction.
(10) The information processing apparatus described in any one of the above (2) to (9), further including:
   a second learning part executing learning of a model used for execution of the action, using a combination of the action and the reward after the correction.
(11) The information processing apparatus described in any one of the above (1) to (10), in which
   the presentation control part controls such that the estimated reward is presented using a method different from that for the presentation of an emotion of the information processing apparatus.
(12) An information processing method including:
   a reward estimation step of executing estimation of a reward for an action on a basis of a user input for the action; and
   a presentation control step of executing control for presentation of an estimated reward.

### [Reference Signs List]

10 Information processing apparatus, 11 Input part, 12 Information processing part, 13 Output part, 21 Sensor part, 22 Operation part, 31 Input control part, 32 State estimating part, 33 Motion producing part, 34 Motion control part, 35 Reward estimating part, 36 Presentation control part, 38 History producing part, 40 Learning part, 51 Motion model learning part, 52 Reward model learning part, 71 Displaying part, 72 Sound output part, 73 Lighting part, 74 Driving part, 75 Communicating part, 100 Robot, 102 Tactile sensor, 103 Gauge, 150 Electronic device, 154 Gauge, 154A Hand, 154B Scale plate, 200 Smartphone, 203 Display, 211 Gauge

## Claims

1. An information processing apparatus comprising:
a reward estimating part executing estimation of a reward for an action on a basis of a first user input for the action; and
a presentation control part executing control for presentation of an estimated reward.

2. The information processing apparatus according to claim 1, wherein
the reward estimating part executes correction of the reward for the action on a basis of a second user input that is input after the presentation of the estimated reward.

3. The information processing apparatus according to claim 2, wherein
the reward estimating part executes correction of the reward for the action on a basis of the second user input that is input in a predetermined time period after the presentation of the estimated reward.

4. The information processing apparatus according to claim 2, wherein
the presentation control part executes control for presentation indicating that the second user input is being accepted.

5. The information processing apparatus according to claim 2, wherein
the presentation control part executes control for presentation of a reward after the correction.

6. The information processing apparatus according to claim 2, wherein
the reward estimating part corrects the reward for the action to a reward estimated on a basis of the second user input.

7. The information processing apparatus according to claim 2, wherein
the reward estimating part corrects the reward for the action to a reward produced by weighted-adding the reward estimated on a basis of the first user input, and the reward estimated on a basis of the second user input, to each other.

8. The information processing apparatus according to claim 2, wherein
the reward estimating part determines necessity or unnecessity of any correction for the reward, on a basis of at least one of a difference between the reward estimated on a basis of the first user input and the reward estimated on a basis of the second user input, and a time period up to a time when the second user input is executed.

9. The information processing apparatus according to claim 2, further comprising:
a first learning part executing learning of a model used for the estimation of the reward, using a combination of the first user input and the reward after the correction.

10. The information processing apparatus according to claim 2, further comprising:
a second learning part executing learning of a model used for execution of the action, using a combination of the action and the reward after the correction.

11. The information processing apparatus according to claim 1, wherein
the presentation control part controls such that the estimated reward is presented using a method different from that for the presentation of an emotion of the information processing apparatus.

12. An information processing method comprising:
a reward estimation step of executing estimation of a reward for an action on a basis of a user input for the action; and
a presentation control step of executing control for presentation of an estimated reward.
